# EUROPEAN PATENT APPLICATION

(11) **EP 3 800 549 A1**
(43) Date of publication of application: **07.04.2021**
(21) Application number: 19819001.9
(22) Date of filing: 13.06.2019
(51) Int. Cl.: G06F 9/455

(54) **MANAGEMENT METHOD, DEVICE AND SYSTEM FOR VIRTUAL MACHINE**

(30) Priority: 15.06.2018 CN 201810623787
(71) Applicant: HUAWEI TECHNOLOGIES CO., LTD., Shenzhen, Guangdong 518129 (CN)
(72) Inventor: XU, An, Shenzhen, Guangdong 518129 (CN)
(74) Representative: Körber, Martin Hans
(86) International application number: PCT/CN2019/091085
(87) International publication number: WO 2019/238092

(57) **Abstract**

This application discloses a virtual machine management method, apparatus, and system, and belongs to the communications field. The system includes a cloud platform and a cloud host. The method includes: receiving, by the cloud platform, a virtual machine stop request message (301) sent by a client, and sending a virtual machine stop request message (302) to the cloud host, where the virtual machine stop request message includes identifier information of a to-be-stopped virtual machine; obtaining, by the cloud host based on the identifier information of the to-be-stopped virtual machine, a resource management policy (303) used to manage a computing resource occupied by the to-be-stopped virtual machine; and stopping, by the cloud host, the to-be-stopped virtual machine, and after stopping the to-be-stopped virtual machine, managing, according to the resource management policy, the computing resource (304) occupied by the to-be-stopped virtual machine. The apparatus includes a receiving unit and a processing unit. This application can resolve a problem that a current manner of managing a virtual machine is excessively simple and undiversified.

## Description

### TECHNICAL FIELD

This application relates to the communications field, and in particular, to a virtual machine management method, apparatus, and system.

### BACKGROUND

A cloud system includes a cloud platform and a cloud host. The cloud platform may create a virtual machine on the cloud host. When the virtual machine runs on the cloud host, the virtual machine needs to occupy a computing resource of the cloud host. The computing resource may be a resource such as a central processing unit (Central Processing Unit, CPU) and/or a memory of the cloud host.

The cloud platform may control the virtual machine on the cloud host to be stopped. After the virtual machine on the cloud host is controlled to be stopped, the cloud host releases the computing resource occupied by the virtual machine. Currently, regardless of which type of virtual machine is created, after the virtual machine is stopped on the cloud host, the cloud host releases the resource occupied by the virtual machine. This virtual machine management manner is excessively simple and undiversified.

### SUMMARY

To resolve a problem that a current virtual machine management manner is excessively simple and undiversified, embodiments of this application provide a virtual machine management method, apparatus, and system. The technical solutions are as follows:

According to a first aspect, an embodiment of this application provides a virtual machine management method, applied to a cloud host. The cloud host receives a virtual machine stop request message sent by the cloud platform, where the virtual machine stop request message includes identifier information of a to-be-stopped virtual machine; obtains, based on the identifier information of the to-be-stopped virtual machine, a resource management policy used to manage a computing resource occupied by the to-be-stopped virtual machine; and stop the to-be-stopped virtual machine, and after stopping the to-be-stopped virtual machine, manage, according to the resource management policy, the computing resource occupied by the to-be-stopped virtual machine. In this way, the cloud host may manage, by using the resource management policy corresponding to the to-be-stopped virtual machine, the computing resource occupied by the to-be-stopped virtual machine, to manage, in different manners, computing resources occupied by virtual machines for different virtual machines. This enriches virtual machine management manners.

In a possible implementation of the first aspect, a type of the to-be-stopped virtual machine is obtained based on the identifier information of the to-be-stopped virtual machine; and a corresponding resource management policy is obtained from a correspondence between a type of a virtual machine and a resource management policy based on the type of the to-be-stopped virtual machine. In this way, resource management policies corresponding to different virtual machines may be obtained through the correspondence between the type of the virtual machine and the resource management policy, to manage, in different manners, computing resources occupied by virtual machines for different virtual machines.

In a possible implementation of the first aspect, when the to-be-stopped virtual machine is a first-type virtual machine occupying a hard disk of the cloud host or the to-be-stopped virtual machine is a second-type virtual machine belonging to a very important people VIP user, the resource management policy is used to indicate the cloud host not to release the computing resource occupied by the to-be-stopped virtual machine. In this way, when the first-type virtual machine or the second-type virtual machine is started, it can ensure that the cloud host has sufficient computing resources to start the first-type virtual machine or the second-type virtual machine, and can avoid that the first-type virtual machine cannot be started after the first-type virtual machine is migrated to another cloud host because the computing resources of the cloud host are insufficient, or can avoid that a second-type cloud host is slowly started after the second-type cloud host is migrated to another cloud host.

In a possible implementation of the first aspect, when the to-be-stopped virtual machine is another type of virtual machine other than the first-type virtual machine and the second-type virtual machine, the resource management policy is used to indicate that the cloud host waits after stopping the to-be-stopped virtual machine and releases, when a waiting time point reaches a preset time threshold, the computing resource occupied by the to-be-stopped virtual machine. Because the computing resource occupied by the to-be-stopped virtual machine is released only when the preset time threshold is reached, when the to-be-stopped virtual machine needs to be started in a waiting process, an operation of applying for the computing resource is omitted, and the to-be-stopped virtual machine may be directly started, to improve a start speed.

In one possible implementation of the first aspect, the correspondence that is between the type of the virtual machine and the resource management policy and that is sent by the cloud platform is received. In this way, resource management policies corresponding to different virtual machines may be obtained through the correspondence between the type of the virtual machine and the resource management policy, to manage, in different manners, computing resources occupied by virtual machines for different virtual machines.

According to a second aspect, an embodiment of this application provides a virtual machine management method, applied to a cloud platform, where the cloud platform is configured to manage a plurality of cloud hosts. The cloud platform receives a virtual machine creation request message sent by a client, where the virtual machine creation request message includes configuration information of a to-be-created virtual machine, and the configuration information includes at least a computing resource quantity required by the to-be-created virtual machine; determine a target cloud host from the plurality of cloud hosts based on the configuration information, where a difference obtained by subtracting the computing resource quantity from a currently remaining idle resource quantity of the target cloud host is greater than or equal to a preset threshold; and send the virtual machine creation request message to the target cloud host, where the virtual machine creation request message is used to request the target cloud host to create the to-be-created virtual machine. The difference is equal to a remaining idle resource quantity of the target cloud host after the target cloud host creates the to-be-created virtual machine. In this way, it can be ensured that some idle resources whose quantity is not less than the preset threshold are still reserved after the target cloud host creates the to-be-created virtual machine, so that when some virtual machines stopped on the target cloud host are started, the reserved idle resources can be used to start the virtual machines. This does not affect a speed of starting the virtual machines.

In a possible implementation of the second aspect, a resource quantity corresponding to each device identifier stored in a correspondence between a device identifier and a resource quantity is obtained, where the resource quantity corresponding to the device identifier includes a currently remaining idle resource quantity of a cloud host corresponding to the device identifier. The computing resource quantity is separately subtracted from the idle resource quantity corresponding to each device identifier, to obtain a difference corresponding to each device identifier. A device identifier is selected from device identifiers whose difference is greater than or equal to the preset threshold, and a cloud host corresponding to the selected device identifier is determined as the target cloud host. This ensures that the reserved idle resource quantity after the target cloud host creates the to-be-created virtual machine is greater than or equal to the preset threshold.

In a possible implementation of the second aspect, a resource quantity corresponding to each device identifier stored in a correspondence between a device identifier and a resource quantity is obtained, where the resource quantity corresponding to the device identifier includes a total resource quantity and a currently remaining idle resource quantity of a cloud host corresponding to the device identifier. The computing resource quantity is separately subtracted from the idle resource quantity corresponding to each device identifier, to obtain a difference corresponding to each device identifier. An idle resource proportion corresponding to each device identifier is separately calculated based on the total resource quantity and the difference corresponding to each device identifier. A device identifier is selected from device identifiers whose idle resource proportions each are greater than or equal to a preset proportion threshold, and a cloud host corresponding to the selected device identifier is determined as the target cloud host. In this way, the reserved idle resource proportion after the target cloud host creates the to-be-created virtual machine is greater than or equal to the preset proportion threshold.

In a possible implementation of the second aspect, identifier information of the to-be-created virtual machine and the device identifier of the target cloud host are correspondingly stored in a correspondence between identifier information of a virtual machine and a device identifier; and/or the idle resource quantity corresponding to the device identifier of the target cloud host that is stored in the correspondence between the device identifier and the resource quantity is updated to the difference corresponding to the device identifier of the target cloud host.

In a possible implementation of the second aspect, a virtual machine migration request message sent by the client is received, where the virtual machine migration request message includes identifier information of a to-be-migrated virtual machine. In the correspondence between the identifier information of the virtual machine and the device identifier, a device identifier of a first cloud host corresponding to the identifier information of the to-be-migrated virtual machine is updated to a device identifier of a second cloud host, where the first cloud host is a cloud host on which the to-be-migrated virtual machine is located before migration, and the second cloud host is a cloud host on which the to-be-migrated virtual machine is located after the migration. Virtual machine migration can be implemented only by updating, in the correspondence between the identifier information of the virtual machine and the device identifier, the device identifier of the first cloud host that corresponds to the identifier information of the to-be-migrated virtual machine to the device identifier of the second cloud host. This improves migration efficiency.

In a possible implementation of the second aspect, when the first cloud host does not release a computing resource occupied by the to-be-migrated virtual machine, a resource application request message is sent to the second cloud host, where the resource application request message includes a computing resource quantity required by the to-be-migrated virtual machine, and the resource application request message is used by the second cloud host to apply for the computing resource for the to-be-migrated virtual machine based on the computing resource quantity required by the to-be-migrated virtual machine. This ensures that when the to-be-migrated virtual machine is started on the second cloud host, there are sufficient computing resources to start the to-be-migrated virtual machine, to improve a start speed.

In a possible implementation of the second aspect, a virtual machine start request message sent by the client is received, where the virtual machine start request message includes identifier information of a to-be-started virtual machine. When the first cloud host on which the to-be-started virtual machine is located does not release the computing resource occupied by the to-be-started virtual machine, or when the first cloud host has released a computing resource occupied by the to-be-started virtual machine and an idle resource quantity of the first cloud host is greater than or equal to a computing resource quantity required by the to-be-started virtual machine, the to-be-started virtual machine is started on the first cloud host. Alternatively, when the first cloud host has released a computing resource occupied by the to-be-started virtual machine and an idle resource quantity of the first cloud host is less than a computing resource quantity required by the to-be-started virtual machine, the to-be-started virtual machine is started on a third cloud host, where a difference obtained by subtracting the computing resource quantity required by the to-be-started virtual machine from an idle resource quantity of the third cloud host is greater than or equal to the preset threshold, and the first cloud host and the third cloud host are two different cloud hosts. In this way, after the to-be-started virtual machine is started on the third cloud host, a remaining idle resource quantity of the third cloud host is still greater than or equal to the preset threshold, so that it can be ensured that some idle resources whose quantity is not less than the preset threshold are still reserved after the to-be-started virtual machine is started on the third cloud host, so that when some virtual machines stopped on the third cloud host are started, the reserved idle resources can be used to start the virtual machines. This does not affect a speed of starting the virtual machines.

In a possible implementation of the second aspect, a virtual machine deletion request message sent by the client is received, where the virtual machine deletion request message includes identifier information of a to-be-deleted virtual machine; and a correspondence including the identifier information of the to -be-deleted virtual machine is deleted from the correspondence between the identifier information of the virtual machine and the device identifier.

According to a third aspect, an embodiment of this application provides a virtual machine management apparatus for performing the method in the first aspect or any possible implementation of the first aspect. Specifically, the apparatus includes units configured to perform the method in the first aspect or any possible implementation of the first aspect.

According to a fourth aspect, the application embodiment provides a virtual machine management apparatus for performing the method in the second aspect or any possible implementation of the second aspect. Specifically, the apparatus includes units configured to perform the method in the second aspect or any possible implementation of the second aspect.

According to a fifth aspect, an embodiment of this application provides a virtual machine management apparatus. The apparatus includes a transceiver, a processor, and a memory. The transceiver, the processor, and the memory may be connected to each other by using a bus system. The memory is configured to store a program, an instruction, or code, and the processor is configured to execute the program, the instruction, or the code in the memory, to complete the method in the first aspect or any possible implementation of the first aspect or the method in the second aspect or any possible implementation of the second aspect.

According to a sixth aspect, an embodiment of this application provides a computer program product. The computer program product includes a computer program stored in a computer readable storage medium. In addition, the computer program is loaded by a processor, to implement the method in the first aspect or any possible implementation of the first aspect or the method in the second aspect or any possible implementation of the second aspect.

According to a seventh aspect, an embodiment of this application provides a non-volatile computer-readable storage medium, configured to store a computer program. The computer program is loaded by a processor to execute an instruction of the method in the first aspect or any possible implementation of the first aspect or an instruction of the method in the second aspect or any possible implementation of the second aspect.

According to an eighth aspect, an embodiment of this application provides a chip. The chip includes a programmable logic circuit and/or a program instruction. When running, the chip is configured to implement the method in the first aspect or any possible implementation of the first aspect or the method in the second aspect or any possible implementation of the second aspect.

According to a ninth aspect, an embodiment of this application provides a virtual machine management system, including the apparatus in the third aspect and the apparatus in the fourth aspect.

### BRIEF DESCRIPTION OF DRAWINGS

FIG. 1 is a schematic structural diagram of a system according to an embodiment of this application;
FIG. 2 is a flowchart of a virtual machine creation method according to an embodiment of this application;
FIG. 3 is a flowchart of a virtual machine stopping method according to an embodiment of this application;
FIG. 4 is a flowchart of a virtual machine migration method according to an embodiment of this application;
FIG. 5 is a flowchart of a virtual machine starting method according to an embodiment of this application;
FIG. 6 is a flowchart of a virtual machine deletion method according to an embodiment of this application;
FIG. 7 is a schematic structural diagram of a virtual machine management apparatus according to an embodiment of this application;
FIG. 8 is a schematic structural diagram of another virtual machine management apparatus according to an embodiment of this application;
FIG. 9 is a schematic structural diagram of another virtual machine management apparatus according to an embodiment of this application;
FIG. 10 is a schematic structural diagram of another virtual machine management apparatus according to an embodiment of this application; and
FIG. 11 is a schematic structural diagram of a virtual machine management system according to an embodiment of this application.

### DESCRIPTION OF EMBODIMENTS

The following further describes in detail the embodiments of this application with reference to accompanying drawings.

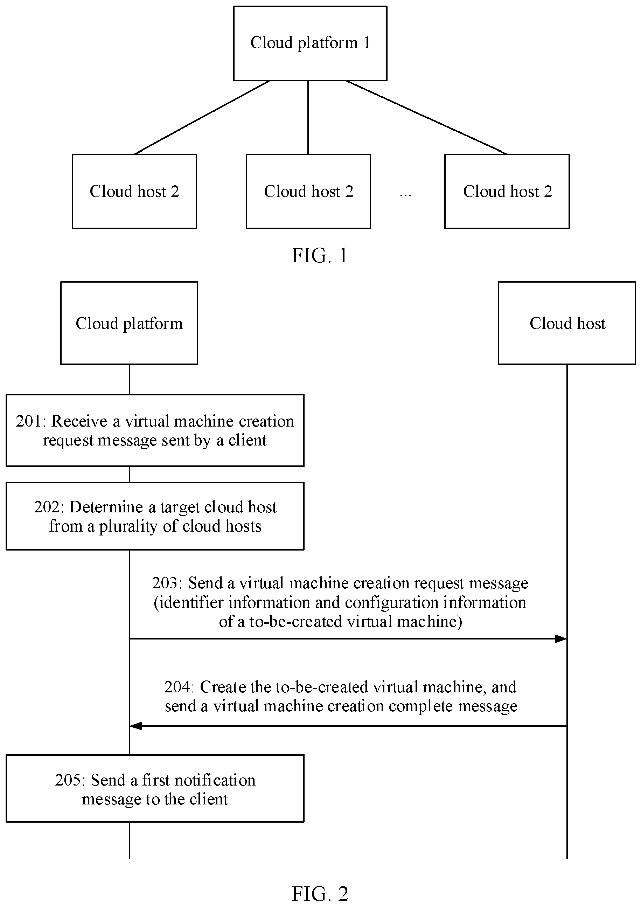

Referring to FIG. 1, an embodiment of this application provides a system. The system includes:
a cloud platform 1 and a plurality of cloud hosts 2.

Optionally, a network connection is established between the cloud platform 1 and each of the plurality of cloud hosts 2. Optionally, the network connection may be a wired connection or a wireless connection.

The cloud platform 1 may be configured to manage a virtual machine on the cloud host 2.

Optionally, a management operation performed by the cloud platform 1 on the virtual machine on the cloud host 2 may include at least one of management operations such as creating the virtual machine on the cloud host 2, stopping the virtual machine on the cloud host 2, starting the virtual machine on the cloud host 2, migrating the virtual machine on the cloud host 2, and deleting the virtual machine on the cloud host 2.

Optionally, the cloud host 2 may provide a computing resource required for running the virtual machine included by the cloud host 2. The computing resource may include a CPU, memory space, and the like.

The operation of creating the virtual machine on the cloud host 2 may be as follows.

The cloud platform 1 may be configured to: receive a virtual machine creation request message sent by a client, where the virtual machine creation request message includes configuration information of a to-be-created virtual machine, and the configuration information includes at least a computing resource quantity required by the to-be-created virtual machine; determine a target cloud host from the plurality of cloud hosts 2 based on the configuration information, where a difference obtained by subtracting the computing resource quantity from a currently remaining idle resource quantity of the target cloud host is greater than or equal to a preset threshold; and allocate identifier information used to identify the to-be-created virtual machine, and send, to the target cloud host, a virtual machine creation request message including the identifier information and the configuration information of the to-be-created virtual machine.

The target cloud host receives the virtual machine creation request message, creates the to-be-created virtual machine, allocates a computing resource to the to-be-created virtual machine based on the computing resource quantity carried in the virtual machine creation request message, and sends a virtual machine creation complete message to the cloud platform 1.

The cloud platform 1 receives the virtual machine creation complete message, and determines that the target cloud host has created the to-be-created virtual machine.

Optionally, the cloud platform 1 is further configured to store a correspondence between identifier information of a virtual machine and a device identifier of a cloud host, a correspondence between a device identifier of a cloud host and a resource quantity, and/or a correspondence between identifier information of a virtual machine and a resource quantity.

Optionally, after the target cloud host has created the to-be-created virtual machine, the cloud platform 1 may correspondingly store the identifier information of the to-be-created virtual machine and a device identifier of the target cloud host in a correspondence between identifier information of a virtual machine and a device identifier.

The identifier information of the to-be-created virtual machine may include information such as a universally unique identifier (Universally Unique Identifier, UUID) of the to-be-created virtual machine. The device identifier of the target cloud host may include information such as an internet protocol (Internet Protocol, IP) address and/or a media access control (Media Access Control, MAC) address of the target cloud host.

For example, if the identifier information of the to-be-created virtual machine is a UUID 1, and the device identifier of the target cloud host is IP 1, after the target cloud host 1 creates the to-be-created virtual machine, the cloud platform 1 may correspondingly store the identifier information UUID 1 of the to-be-created virtual machine and the device identifier IP 1 of the target cloud host in a correspondence between identifier information of a virtual machine and a device identifier shown in Table 1.

**Table 1**

| Identifier information of a virtual machine | Device identifier |
|---|---|
| UUID 1 | IP 1 |
| ... | ... |

Optionally, after the target cloud host creates the to-be-created virtual machine, the cloud platform 1 may further update, in the correspondence between the device identifier and the resource quantity, a resource quantity corresponding to the target cloud host. The resource quantity corresponding to the target cloud host may include the currently remaining idle resource quantity of the target cloud host and a total resource quantity of the target cloud host. During implementation, the idle resource quantity corresponding to the device identifier of the target cloud host that is stored in the correspondence between the device identifier and the resource quantity is updated to the difference.

For example, referring to a correspondence between a device identifier and a resource quantity shown in Table 2, if the device identifier of the target cloud host is IP 1, the currently remaining idle resource quantity of the target cloud host is 30, and the computing resource quantity required by the to-be-created virtual machine is 5, a calculated difference is 25. Therefore, in the correspondence between the device identifier and the resource quantity shown in Table 2, the idle resource quantity 30 corresponding to the device identifier IP 1 of the target cloud platform is updated to the difference 25, to obtain a correspondence between a device identifier and a resource quantity shown in Table 3.

**Table 2**

| Device identifier | Resource quantity | |
|---|---|---|
| | Total resource quantity | Idle resource quantity |
| IP 1 | 50 | 30 |
| ... | ... | ... |

**Table 3**

| Device identifier | Resource quantity | |
|---|---|---|
| | Total resource quantity | Idle resource quantity |
| IP 1 | 50 | 25 |
| ... | ... | ... |

The operation of stopping the virtual machine on the cloud host 2 may be as follows.

The cloud host 1 receives a virtual machine stop request message sent by a client, where the virtual machine stop request message includes identifier information of a to-be-stopped virtual machine; obtains, from a correspondence between identifier information of a virtual machine and a device identifier based on the identifier information of the to-be-stopped virtual machine, a device identifier of the cloud host 2 on which the to-be-stopped virtual machine is located; and forwards the virtual machine stop request message to the cloud host 2 corresponding to the device identifier.

The cloud host 2 may receive the virtual machine stop request message, and obtain, based on the identifier information of the to-be-stopped virtual machine included in the virtual machine stop request message, a resource management policy used to manage a computing resource occupied by the to-be-stopped virtual machine; and stop the to-be-stopped virtual machine, and after stopping the to-be-stopped virtual machine, manage, according to the resource management policy, the computing resource occupied by the to-be-stopped virtual machine.

Optionally, the cloud host 2 stores a correspondence between a type of a virtual machine and a resource management policy. Therefore, the cloud host 2 may obtain a type of the to-be-stopped virtual machine based on the identifier information of the to-be-stopped virtual machine; and obtain a corresponding resource management policy from the correspondence between the type of the virtual machine and the resource management policy based on the type of the to-be-stopped virtual machine.

Referring to Table 4, Table 4 shows a correspondence between a type of a virtual machine and a resource management policy. As shown in Table 4, types of virtual machines include a first-type virtual machine, a second-type virtual machine, and a third-type virtual machine. The first-type virtual machine is a virtual machine occupying a hard disk of the cloud host. A resource management policy corresponding to the first-type virtual machine is a first resource management policy. The first resource management policy indicates the cloud host not to release, after stopping the first-type virtual machine, a computing resource occupied by the first-type virtual machine. Because the first-type virtual machine occupies the hard disk of the cloud host, user data is usually stored in the hard disk of the cloud host when the first-type virtual machine runs on the cloud host, and the user data is used when the first-type virtual machine is restarted after being stopped. When the first-type virtual machine is started, if the cloud host does not have sufficient computing resources for a first-type cloud host to use, the first-type cloud host is migrated to another cloud host for starting. Because the required user data that is required by the first-type cloud host to start the first-type virtual machine is not stored in a hard disk of the another cloud host, the another cloud host cannot start the first-type virtual machine.

To resolve this problem, in this embodiment of this application, after stopping the first-type virtual machine, the cloud host does not release, according to the first resource management policy, the computing resource occupied by the first-type virtual machine, to ensure that the cloud host has the computing resource to start the first-type virtual machine. In addition, when the first-type virtual machine is started, the user data stored in the hard disk of the cloud host may be used, to ensure that the first-type virtual machine can be restarted.

A second type of virtual machine is a virtual machine of a very important people (Very Important People, VIP) user. A resource management policy corresponding to the second type of virtual machine is a second resource management policy. The second resource management policy indicates the cloud host not to release, after stopping the virtual machine, a computing resource occupied by the virtual machine. The VIP user is usually a paid user. To retain the paid user and improve use experience of the paid user, a time period required for starting the second-type virtual machine after being stopped needs to be reduced. Therefore, in this embodiment of this application, after stopping the second-type virtual machine, the cloud host does not release, according to the second resource management policy, the computing resource occupied by the second-type virtual machine, to ensure that the cloud host has the computing resource to quickly start the second-type virtual machine.

A third-type virtual machine is another type of virtual machine other than the first-type virtual machine and the second-type virtual machine. A resource management policy corresponding to the third-type virtual machine is a third resource management policy. The third resource management policy includes a preset time threshold, used to indicate that the cloud host waits after the third-type virtual machine is stopped and releases, when a waiting time point reaches the preset time threshold, a computing resource occupied by the third-type virtual machine.

After stopping the third-type virtual machine, the cloud host may quickly start the third-type virtual machine. Therefore, the third resource management policy includes the preset time threshold, used to indicate that the cloud host waits after the third-type virtual machine is stopped, but does not immediately release the computing resource occupied by the third-type virtual machine. In this way, if the cloud host needs to start the third-type virtual machine within the waiting time period, the cloud host does not need to apply for the computing resource, and may directly use the unreleased computing resource to start the third-type virtual machine, to improve a start speed.

Hard disks used by the second-type virtual machine and the third-type virtual machine are usually not local hard disks of the cloud host, but shared hard disks in a network. In this way, when the second-type virtual machine is started, the second-type virtual machine may read data stored in the shared hard disk from the shared hard disk. When the third-type virtual machine is started after being migrated to another cloud host, the third-type virtual machine may also read data stored in the shared hard disk from the shared hard disk.

**Table 4**

| | |
|---|---|
| Type of a virtual machine | Resource management policy |
| First-type of virtual machine | First resource management policy |
| Second-type virtual machine | Second resource management policy |
| Third-type virtual machine | Third resource management policy |

The operation of migrating the virtual machine on the cloud host 2 may be as follows.

The cloud platform 1 receives a virtual machine migration request message sent by a client, where the virtual machine migration request message includes identifier information of a to-be-migrated virtual machine; and updates, in a correspondence between identifier information of a virtual machine and a device identifier, a device identifier of a first cloud host corresponding to the identifier information of the to-be-migrated virtual machine to a device identifier of a second cloud host, where the first cloud host is a cloud host on which the to-be-migrated virtual machine is located before migration, and the second cloud host is a cloud host on which the to-be-migrated virtual machine is located after the migration.

Optionally, when the first cloud host does not release a computing resource occupied by the to-be-migrated virtual machine, the cloud platform 1 may further send a resource application request message to the second cloud host, where the resource application request message includes a computing resource quantity required by the to-be-migrated virtual machine, and the resource application request message is used by the second cloud host to apply for the computing resource for the to-be-migrated virtual machine based on the computing resource quantity required by the to-be-migrated virtual machine.

The operation of starting the virtual machine on the cloud host 2 may be as follows.

The cloud platform 1 receives a virtual machine start request message sent by a client, where the virtual machine start request message includes identifier information of a to-be-started virtual machine; obtains, from a correspondence between identifier information of a virtual machine and a device identifier based on the identifier information of the to-be-started virtual machine, a device identifier of a first cloud host on which the to-be-started virtual machine is located; and sends the virtual machine start request message to the first cloud host corresponding to the device identifier.

The first cloud host receives the virtual machine start request message, and determines the to-be-started virtual machine based on the identifier information of the to-be-started virtual machine that is included in the virtual machine start request message; and if an idle resource quantity of the first cloud host is greater than or equal to a computing resource quantity required by the to-be-started virtual machine, and the first cloud host has released a computing resource occupied by the to-be-started virtual machine, or the first cloud host does not release a computing resource occupied by the to-be-started virtual machine, starts the to-be-started virtual machine, and sends a virtual machine start complete message to the cloud platform 1. If the idle resource quantity of the first cloud host is less than the computing resource quantity required by the to-be-started virtual machine, and the first cloud host has released the computing resource occupied by the to-be-started virtual machine, the first cloud host sends a virtual machine start failure message to the cloud platform 1.

The cloud platform 1 determines, when receiving the virtual machine start complete message, that the to-be-started virtual machine is successfully started; determines, when receiving the virtual machine start failure message, a third cloud host from the plurality of cloud hosts 2 based on the computing resource quantity required by the to-be-started virtual machine, where a difference obtained by subtracting the computing resource quantity from a currently remaining idle resource quantity of the third cloud host is greater than or equal to a preset threshold; and sends a virtual machine start request message including the identifier information and configuration information of the to-be-started virtual machine to the third cloud host, where the configuration information includes at least the computing resource quantity required by the to-be-started virtual machine.

The third cloud host receives the virtual machine start request message, creates the to-be-started virtual machine, allocates the computing resource to the to-be-started virtual machine based on the computing resource quantity carried in the virtual machine start request message, and sends a virtual machine start success message to the cloud platform 1. The cloud platform 1 receives the virtual machine start success message, and determines that the to-be-started virtual machine is successfully started.

The operation of deleting the virtual machine on the cloud host 2 may be as follows.

The cloud platform 1 receives a virtual machine deletion request message sent by a client, where the virtual machine deletion request message includes identifier information of a to-be-deleted virtual machine; deletes, from a correspondence between identifier information of a virtual machine and a device identifier based on the identifier information of the to-be-deleted virtual machine, a correspondence including the identifier information of the to-be-deleted virtual machine.

Optionally, when the cloud host does not release a computing resource occupied by the to-be-deleted virtual machine, the cloud platform 1 sends a resource release request message to the cloud host based on a device identifier of the cloud host, where the resource release request message includes the identifier information of the to-be-deleted virtual machine, and the resource release request message is used by the cloud host to release, based on the identifier information of the to-be-deleted virtual machine, the computing resource occupied by the to-be-deleted virtual machine.

Optionally, for each cloud host 2, the cloud host 2 may obtain a remaining idle resource quantity of the cloud host 2, and report the remaining idle resource quantity of the cloud host 2 to the cloud platform 1. The cloud host 2 may determine virtual machines whose computing resources are not released currently, calculate a total occupied computing resource quantity based on computing resource quantities occupied by the determined virtual machines, and obtain the remaining idle resource quantity of the cloud host 2 based on a total computing resource quantity included by the virtual machines and the total occupied computing resource quantity.

Optionally, the cloud platform 1 may receive an idle resource quantity sent by the cloud host 2, and update, in a correspondence between a device identifier and a resource quantity, an idle resource quantity corresponding to a device identifier of the cloud host 2 to the received idle resource quantity.

The cloud host 2 may obtain the idle resource quantity of the cloud host 2 when a virtual machine included by the cloud host 2 changes. For example, the cloud host 2 obtains the idle resource quantity of the cloud host 2 when stopping a virtual machine, when creating a virtual machine, or when starting a virtual machine. Alternatively, the cloud host 2 may periodically obtain an idle resource quantity of the cloud host 2.

Referring to FIG. 2, an embodiment of this application provides a virtual machine management method. The management method may be used to perform the foregoing operation of creating the virtual machine on the cloud host, and may be applied to the system shown in FIG. 1. The method includes the following steps.

Step 201: A cloud platform receives a virtual machine creation request message sent by a client, where the virtual machine creation request message includes configuration information of a to-be-created virtual machine, and the configuration information includes at least a computing resource quantity required by the to-be-created virtual machine.

When a user needs to create a virtual machine, for ease of description, the virtual machine is referred to as the to-be-created virtual machine, and the user may enter the configuration information of the to-be-created virtual machine to the client. Then, the client obtains the configuration information of the to-be-created virtual machine, and sends, to the cloud platform, the virtual machine creation request message including the configuration information of the to-be-created virtual machine.

Step 202: The cloud platform determines a target cloud host from a plurality of cloud hosts based on the configuration information, where a difference obtained by subtracting the computing resource quantity from a currently remaining idle resource quantity of the target cloud host is greater than or equal to a preset threshold.

The calculated difference is equal to a remaining idle resource quantity of the target cloud host after the target cloud host creates the to-be-created virtual machine. In this way, it can be ensured that some idle resources whose quantity is not less than the preset threshold are still reserved after the target cloud host creates the to-be-created virtual machine, so that for virtual machines that have been stopped on the target cloud host, when some stopped virtual machines are started, the reserved idle resources may be used to start the some virtual machines. The virtual machines on the target cloud host are started on the target cloud host in a relatively high speed, to improve the speed of starting the virtual machines.

Optionally, the following two manners are listed in this step to determine the target cloud host, and other manners are not listed one by one. The two manners are respectively as follows.

In a first manner, an idle resource quantity reserved by the target cloud host may be greater than or equal to a preset threshold. During implementation of this manner, a resource quantity corresponding to each device identifier stored in a correspondence between a device identifier and a resource quantity may be obtained, where the resource quantity corresponding to the device identifier includes a currently remaining idle resource quantity of a cloud host corresponding to the device identifier. The computing resource quantity is separately subtracted from the idle resource quantity corresponding to each device identifier, to obtain a difference corresponding to each device identifier. A device identifier is selected from device identifiers whose difference is greater than or equal to the preset threshold, and a cloud host corresponding to the selected device identifier is determined as the target cloud host.

Optionally, for each device identifier whose difference is greater than or equal to the preset threshold, a device identifier may be selected based on load of the cloud host corresponding to each device identifier, for example, a device identifier of a cloud host with a lightest load may be selected.

In the second manner, an idle resource proportion reserved by the target cloud host may be greater than or equal to a preset proportion threshold. During implementation of this manner, a resource quantity corresponding to each device identifier stored in a correspondence between a device identifier and a resource quantity may be obtained, where the resource quantity corresponding to the device identifier includes a total resource quantity and a currently remaining idle resource quantity of a cloud host corresponding to the device identifier. The computing resource quantity is separately subtracted from the idle resource quantity corresponding to each device identifier, to obtain a difference corresponding to each device identifier. An idle resource proportion corresponding to each device identifier is separately calculated based on the total resource quantity and the difference corresponding to each device identifier. A device identifier is selected from device identifiers whose idle resource proportions each are greater than or equal to a preset proportion threshold, and a cloud host corresponding to the selected device identifier is determined as the target cloud host.

Optional, for each device identifier whose idle resource proportion is greater than or equal to the preset scale threshold, a device identifier may be selected based on load of the cloud host corresponding to each device identifier, for example, a device identifier of a cloud host with a lightest load may be selected.

Step 203: Assign identifier information used to identify the to-be-created virtual machine, and send, to the target cloud host, a virtual machine creation request message including the identifier information and the configuration information of the to-be-created virtual machine.

The identifier information for the to-be-created virtual machine is used to uniquely identify the to-be-created virtual machine, and the identifier information of the to-be-created virtual machine may include information such as a UUID of the to-be-created virtual machine.

Step 204: The target cloud host receives the virtual machine creation request message, creates the to-be-created virtual machine, and sends a virtual machine creation complete message to the cloud platform.

Optionally, the target cloud host receives the virtual machine creation request message, where the virtual machine creation request message includes the identifier information and the computing resource quantity of the to-be-created virtual machine; creates the to-be-created virtual machine; sets the to-be-created virtual machine to correspond to the identifier information of the to-be-created virtual machine; and allocates a computing resource to the to-be-created virtual machine based on the computing resource quantity of the to-be-created virtual machine, to create the to-be-created virtual machine.

Step 205: The cloud platform receives the virtual machine creation complete message, and sends, to the client, a first notification message including the identifier information for the to-be-created virtual machine, to notify the client that the to-be-created virtual machine is created.

Optional, the client receives the first notification message, and can save the identifier information for the to-be-created virtual machine that is included in the first notification message for a subsequent request of stopping the virtual machine, starting the virtual machine, migrating the virtual machine, and/or deleting the virtual machine.

Optionally, after receiving the virtual machine creation complete message, the cloud platform may further correspondingly store the identifier information of the to-be-created virtual machine and the device identifier of the target cloud host in a correspondence between identifier information of a virtual machine and a device identifier; and/or
update the idle resource quantity corresponding to the device identifier of the target cloud host that is stored in the correspondence between the device identifier and the resource quantity to the difference; and/or
correspondingly store the identifier information and the computing resource quantity of the to-be-created virtual machine in a correspondence between identifier information and a computing resource quantity of a virtual machine.

In this embodiment of this application, after the target cloud host is determined, because the remaining idle resource quantity of the target cloud host is greater than or equal to the preset threshold after the target cloud host creates the to-be-created virtual machine, it can be ensured that the some idle resources whose quantity is not less than the preset threshold are still reserved after the target cloud host creates the to-be-created virtual machine, so that when the some virtual machines stopped on the target cloud host are started, the reserved idle resources may be used to start the some virtual machines. This does not affect a speed of starting the virtual machines.

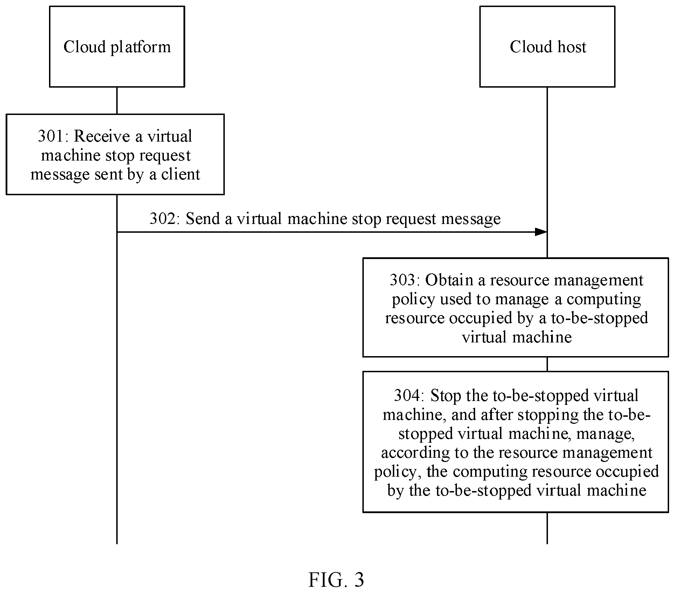

Referring to FIG. 3, an embodiment of this application provides a virtual machine management method. The management method may be used to perform the foregoing operation of stopping the virtual machine on the cloud host, and may be applied to the system shown in FIG. 1. The method includes the following steps.

Step 301: A cloud platform receives a virtual machine stop request message sent by a client, where the virtual machine stop request message includes identifier information of a to-be-stopped virtual machine.

When a user needs to stop a virtual machine, for ease of description, the virtual machine is referred to as the to-be-stopped virtual machine, and the user may enter the identifier information of the to-be-stopped virtual machine to the client. Then the client obtains the identifier information of the to-be-stopped virtual machine, and sends a virtual machine stop request message including the identifier information of the to-be-stopped virtual machine to the cloud platform.

Step 302: The cloud platform forwards, based on the identifier information of the to-be-stopped virtual machine, the virtual machine stop request message to a cloud host on which the to-be-stopped virtual machine is located.

This step may be that: The cloud platform obtains, from a correspondence between identifier information of a virtual machine and a device identifier based on the identifier information of the to-be-stopped virtual machine, a device identifier of the cloud host on which the to-be-stopped virtual machine is located, and forwards the virtual machine stop request message to the cloud host corresponding to the device identifier.

Step 303: The cloud host receives the virtual machine stop request message, and obtains, based on the identifier information of the to-be-stopped virtual machine included in the virtual machine stop request message, a resource management policy used to manage a computing resource occupied by the to-be-stopped virtual machine.

The cloud host stores a correspondence between a type of a virtual machine and a resource management policy. Therefore, the cloud host may obtain a type of the to-be-stopped virtual machine based on the identifier information of the to-be-stopped virtual machine; and obtain a corresponding resource management policy from the correspondence between the type of the virtual machine and the resource management policy based on the type of the to-be-stopped virtual machine.

Optionally, before this step is performed, the cloud platform may send the correspondence between the type of the virtual machine and the resource management policy to each cloud host. For each cloud host, the cloud host receives and stores the correspondence between the type of the virtual machine and the resource management policy.

Optionally, the correspondence between the type of the virtual machine and the resource management policy may be created by the cloud platform.

In this step, it is assumed that the correspondence between the type of the virtual machine and the resource management policy is shown in Table 4. When the type of the to-be-stopped virtual machine is a first-type virtual machine, the obtained resource management policy is a first resource management policy. When the type of the to-be-stopped virtual machine is a second type of virtual machine, the obtained resource management policy is a second resource management policy. When the type of the to-be-stopped virtual machine is a third type of virtual machine, the obtained resource management policy is a third resource management policy.

Step 304: The cloud host stops the to-be-stopped virtual machine, and after stopping the to-be-stopped virtual machine, manages, according to the resource management policy, the computing resource occupied by the to-be-stopped virtual machine.

When the resource management policy is the first resource management policy or the second resource management policy, after stopping the to-be-stopped virtual machine, the cloud host does not release the computing resource occupied by the to-be-stopped virtual machine.

When the resource management policy is the third resource management policy, the cloud host waits after stopping the to-be-stopped virtual machine, and releases, when a waiting time point reaches a preset time threshold, the computing resource occupied by the to-be-stopped virtual machine.

Optionally, if the cloud host receives, in a waiting process, a virtual machine start request message that is sent by the cloud platform and that is used to request to start the to-be-stopped virtual machine, the cloud host does not release the computing resource occupied by the to-be-stopped virtual machine, but directly uses the computing resource to start the to-be-stopped virtual machine, to improve a start speed.

Optionally, the cloud host may further send a virtual machine stopping complete message to the cloud platform, where the virtual machine stopping complete message may further include status identifier information, and the status identifier information is used to identify whether the cloud host releases the computing resource occupied by the to-be-stopped virtual machine. The cloud platform receives the virtual machine stopping complete message, correspondingly stores the identifier information of the to-be-stopped virtual machine and the status identifier information included in the virtual machine stopping complete message in a correspondence between identifier information of a virtual machine and status identifier information, and sends the second notification message to the client, to notify the client that the to-be-stopped virtual machine has been stopped.

Optionally, for each cloud host, the cloud host may obtain a remaining idle resource quantity of the cloud host, and report the remaining idle resource quantity of the cloud host to the cloud platform. The cloud host may determine virtual machines whose computing resources are not released currently, calculate a total occupied computing resource quantity based on computing resource quantities occupied by the determined virtual machines, and obtain the remaining idle resource quantity of the cloud host based on a total computing resource quantity included by the virtual machines and the total occupied computing resource quantity.

Optionally, the cloud platform may receive the idle resource quantity sent by the cloud host, and update, in a correspondence between a device identifier and a resource quantity, the idle resource quantity corresponding to the device identifier of the cloud host to the received idle resource quantity.

The cloud host may obtain the idle resource quantity of the cloud host when a virtual machine included by the cloud host changes. For example, the cloud host obtains the idle resource quantity of the cloud host when stopping a virtual machine, when creating a virtual machine, or when starting a virtual machine. Alternatively, the cloud host may periodically obtain the idle resource quantity of the cloud host.

In this embodiment of this application, the cloud host obtains, based on the identifier information of the to-be-stopped virtual machine, a resource management policy corresponding to the to-be-stopped virtual machine. In this way, after stopping the to-be-stopped virtual machine, the cloud host manages, based on the resource management policy, the computing resource occupied by the to-be-stopped virtual machine, so that for each virtual machine, a resource management policy corresponding to the virtual machine is used to manage a computing resource occupied by the virtual machine. This enriches a manner of managing the virtual machine.

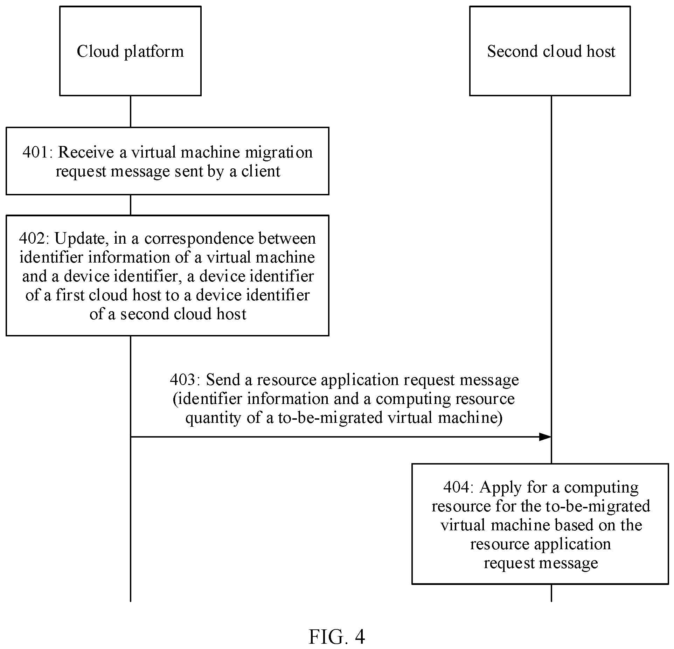

Referring to FIG. 4, an embodiment of this application provides a virtual machine management method. The management method may be used to perform the foregoing operation of migrating the virtual machine on the cloud host, and may be applied to the system shown in FIG. 1. The method includes the following steps.

Step 401: A cloud platform receives a virtual machine migration request message sent by a client, where the virtual machine migration request message includes identifier information of a to-be-migrated virtual machine.

When a user needs to migrate a virtual machine, for ease of description, the virtual machine is referred to as the to-be-migrated virtual machine, and the user may enter the identifier information of the to-be-migrated virtual machine to the client. Then, the client obtains the identifier information of the to-be-migrated virtual machine, and sends, to the cloud platform, the virtual machine migration request message including the identifier information of the to-be-migrated virtual machine.

Step 402: The cloud platform updates, in a correspondence between identifier information of a virtual machine and a device identifier, a device identifier of a first cloud host corresponding to the identifier information of the to-be-migrated virtual machine to a device identifier of a second cloud host, where the first cloud host is a cloud host on which the to-be-migrated virtual machine is located before migration, and the second cloud host is a cloud host on which the to-be-migrated virtual machine is located after the migration.

Optionally, the user may further enter the device identifier of the second cloud host to the client. In this way, the virtual machine migration request message may include the device identifier of the second cloud host, and the cloud platform may obtain the device identifier of the second cloud host from the virtual machine migration request message.

Alternatively, when the user does not enter the device identifier of the second cloud host to the client, in other words, when the virtual machine migration request message does not include the device identifier of the second cloud host, the cloud platform may select, from a plurality of cloud hosts, another cloud host different from the first cloud host as the second cloud host.

Optionally, when the cloud platform selects the second cloud host, if the first cloud host has released a computing resource occupied by the to-be-migrated virtual machine, the cloud platform may randomly select, from a plurality of cloud hosts, another cloud host different from the first cloud host as the second cloud host. If the first cloud host does not release the computing resource occupied by the to-be-migrated virtual machine, the cloud platform may select, from the plurality of cloud hosts, another cloud host whose idle resource quantity is greater than or equal to the computing resource quantity required by the to-be-migrated virtual machine and that is different from the first cloud host as the second cloud host.

Optionally, the cloud platform may obtain corresponding status identifier information from a correspondence between identifier information of a virtual machine and status identifier information based on the identifier information of the to-be-migrated virtual machine, where the status identifier information is used to identify whether the computing resource occupied by the to-be-migrated virtual machine is released, so that the cloud platform may determine, based on the status identifier information, whether the first cloud host releases the computing resource occupied by the to-be-migrated virtual machine.

Optional, the cloud platform can alternatively obtain the computing resource quantity required for the to-be-migrated virtual machine from a correspondence between identifier information of a virtual machine and a computing resource quantity based on the identifier information of the to-be-migrated virtual machine.

Step 403: When the first cloud host does not release the computing resource occupied by the to-be-migrated virtual machine, the cloud platform sends a resource application request message to the second cloud host, where the resource application request message includes the identifier information of the to-be-migrated virtual machine and the required computing resource quantity.

Optionally, the cloud platform may further send a resource release request message to the first cloud host, where the resource release request message includes the identifier information of the to-be-migrated virtual machine. In this way, the first cloud host receives the resource release request message, and releases, based on the identifier information of the to-be-migrated virtual machine included in the resource release request message, the computing resource occupied by the to-be-migrated virtual machine.

Step 404: The second cloud host receives the resource application request message, and applies for the computing resource for the to-be-migrated virtual machine based on the resource application request message.

The resource application request message includes the identifier information of the to-be-migrated virtual machine and the required computing resource quantity. The second cloud host allocates the computing resource based on the computing resource quantity, and sets the computing resources to correspond to the identifier information. In this way, when the to-be-migrated virtual machine is started on the second cloud host, the second cloud host may obtain a computing resource corresponding to the identifier information of the to-be-migrated virtual machine, and start the to-be-migrated virtual machine by using the computing resource.

Optionally, the cloud platform may further send a third notification message to the client after completing the migration, to notify the client that the to-be-migrated virtual machine is migrated

In this embodiment of this application, when migrating the to-be-migrated virtual machine, the cloud platform may update, in the correspondence between the identifier information of the virtual machine and the device identifier, the device identifier of the first cloud host that corresponds to the identifier information of the to-be-migrated virtual machine to the device identifier of the second cloud host, to migrate the virtual machine, and to improve migration efficiency.

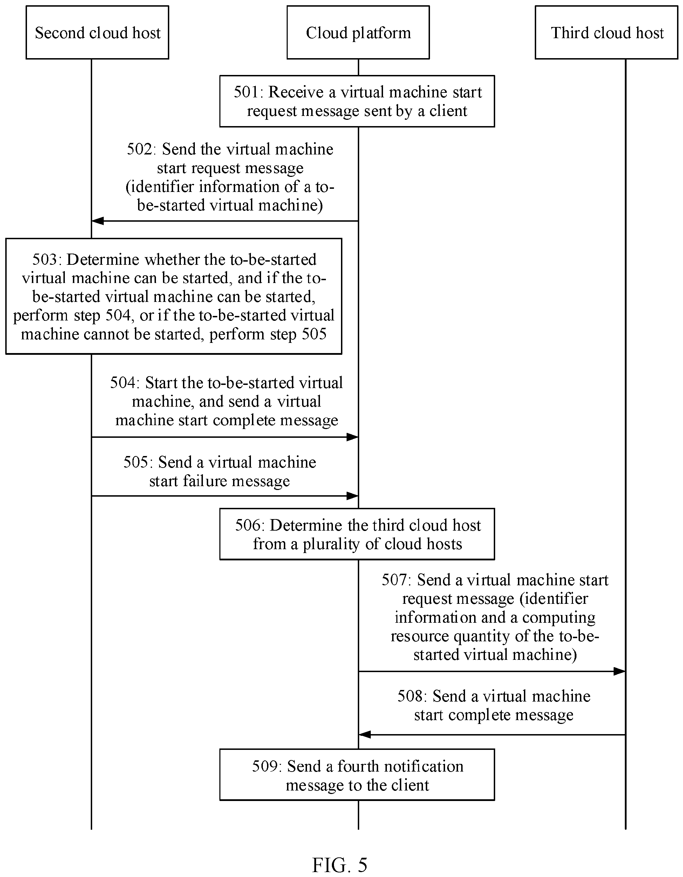

Referring to FIG. 5, an embodiment of this application provides a virtual machine management method. The management method may be used to perform the foregoing operation of starting the virtual machine on the cloud host, and may be applied to the system shown in FIG. 1. The method includes the following steps.

Step 501: A cloud platform receives a virtual machine start request message sent by a client, where the virtual machine start request message includes identifier information of a to-be-started virtual machine.

When a user needs to start a stopped virtual machine, for ease of description, the virtual machine is referred to as the to-be-started virtual machine, and the user may enter the identifier information of the to-be-started virtual machine to the client. Then, the client obtains the identifier information of the to-be-started virtual machine, and sends, to the cloud platform, the virtual machine start request message including the identifier information of the to-be-started virtual machine.

Step 502: The cloud platform forwards, based on the identifier information of the to-be-started virtual machine, the virtual machine start request message to a first cloud host on which the to-be-started virtual machine is located.

This step may be that: The cloud platform obtains, from a correspondence between identifier information of a virtual machine and a device identifier based on the identifier information of the to-be-started virtual machine, a device identifier of a first cloud host on which the to-be-started virtual machine is located, and sends the virtual machine start request message to the first cloud host corresponding to the device identifier.

Step 503: The first cloud host receives the virtual machine start request message, determines, based on the virtual machine start request message, whether the to-be-started virtual machine can be started, and if the to-be-started virtual machine can be started, performs step 504, or if the to-be-started virtual machine cannot be started, performs step 505.

The first cloud host determines the to-be-started virtual machine based on the identifier information of the to-be-started virtual machine that is included in the virtual machine start request message, obtains a computing resource quantity to be occupied by the to-be-started virtual machine, if the first cloud host does not release the computing resource occupied by the to-be-started virtual machine, determines that the to-be-started virtual machine can be started, if the first cloud host has released the computing resource occupied by the to-be-started virtual machine, and the computing resource quantity required by the to-be-started virtual machine is less than or equal to a currently remaining idle resource quantity of the first cloud host, determines that the to-be-started virtual machine can be started, and if the first cloud host has released the computing resource occupied by the to-be-started virtual machine, and the computing resource quantity required by the to-be-started virtual machine is greater than the currently remaining idle resource quantity of the first cloud host, determines that the to-be-started virtual machine cannot be started.

Step 504: The first cloud host starts the to-be-started virtual machine, sends a virtual machine start complete message to the cloud platform, and performs step 509.

Step 505: The first cloud host sends a virtual machine start failure message to the cloud platform, and performs step 506.

Step 506: The cloud platform receives the virtual machine start failure message, and determines a third cloud host from a plurality of cloud hosts based on the identifier information of the to-be-started virtual machine, where a difference obtained by subtracting the computing resource quantity required by the to-be-started virtual machine from a currently remaining idle resource quantity of the third cloud host is greater than or equal to a preset threshold.

Optional, the cloud platform obtains, from a correspondence between identifier information of a virtual machine and a computing resource quantity based on the identifier information of the to-be-started virtual machine, the computing resource quantity required by the to-be-started virtual machine, and determines the third cloud host from the plurality of cloud hosts based on the computing resource quantity.

Optionally, the following two manners are listed in this step to determine the third cloud host, and other manners are not listed one by one. The two manners are respectively as follows.

In a first manner, the idle resource quantity reserved by the third cloud host may be greater than or equal to the preset threshold. During implementation of this manner, a resource quantity corresponding to each device identifier stored in a correspondence between a device identifier and a resource quantity may be obtained, where the resource quantity corresponding to the device identifier includes a currently remaining idle resource quantity of a cloud host corresponding to the device identifier. The computing resource quantity is separately subtracted from the idle resource quantity corresponding to each device identifier, to obtain a difference corresponding to each device identifier. A device identifier is selected from device identifiers whose difference is greater than or equal to the preset threshold, and a cloud host corresponding to the selected device identifier is determined as the third cloud host.

Optionally, for each device identifier whose difference is greater than or equal to the preset threshold, a device identifier may be selected based on load of the cloud host corresponding to each device identifier, for example, a device identifier of a cloud host with a lightest load may be selected.

In a second manner, an idle resource proportion reserved by the third cloud host may be greater than or equal to a preset proportion threshold. During implementation of this manner, a resource quantity corresponding to each device identifier stored in a correspondence between a device identifier and a resource quantity may be obtained, where the resource quantity corresponding to the device identifier includes a total resource quantity and a currently remaining idle resource quantity of a cloud host corresponding to the device identifier. The computing resource quantity is separately subtracted from the idle resource quantity corresponding to each device identifier, to obtain a difference corresponding to each device identifier, and an idle resource proportion corresponding to each device identifier is separately calculated based on the total resource quantity and the difference corresponding to each device identifier. A device identifier is selected from device identifiers whose idle resource proportions each are greater than or equal to the preset proportion threshold, and a cloud host corresponding to the selected device identifier is determined as the third cloud host.

Optional, for each device identifier whose idle resource proportion is greater than or equal to the preset scale threshold, a device identifier may be selected based on load of the cloud host corresponding to each device identifier, for example, a device identifier of a cloud host with a lightest load may be selected.

Step 507: The cloud platform sends a virtual machine start request message including the identifier information and configuration information of the to-be-started virtual machine to the third cloud host, where the configuration information includes at least the computing resource quantity required by the to-be-started virtual machine.

Step 508: The third cloud host receives the virtual machine start request message, creates the to-be-started virtual machine, and sends a virtual machine start complete message to the cloud platform.

In this step, the third cloud host receives the virtual machine start request message, creates the to-be-started virtual machine, sets the to-be-started virtual machine to correspond to the identifier information of the to-be-started virtual machine in the virtual machine start request message, allocates a computing resource to the to-be-started virtual machine based on the computing resource quantity included in the virtual machine start request message, and sends the virtual machine start complete message to the cloud platform, to start the to-be-started virtual machine.

Step 509: The cloud platform receives the virtual machine start complete message, and sends a fourth notification message to the client, to notify the client that the to-be-started virtual machine is started.

The first cloud host and/or the third cloud host can obtain the remaining idle resource quantity of the first cloud host and/or the third cloud host and report the remaining idle resource quantity to the cloud platform. For a detailed implementation process, refer to related content in the embodiment shown in FIG. 3. Details are not described herein.

In this embodiment of this application, after the third cloud host starts the to-be-started virtual machine, the remaining idle resource quantity of the third cloud host is greater than or equal to the preset threshold. This can ensure that some idle resources whose quantity is not less than the preset threshold are still reserved after the third cloud host starts the to-be-started virtual machine, so that when some virtual machines stopped on the third cloud host are started, the reserved idle resources may be used to start the some virtual machines. This does not affect a speed of starting the some virtual machines.

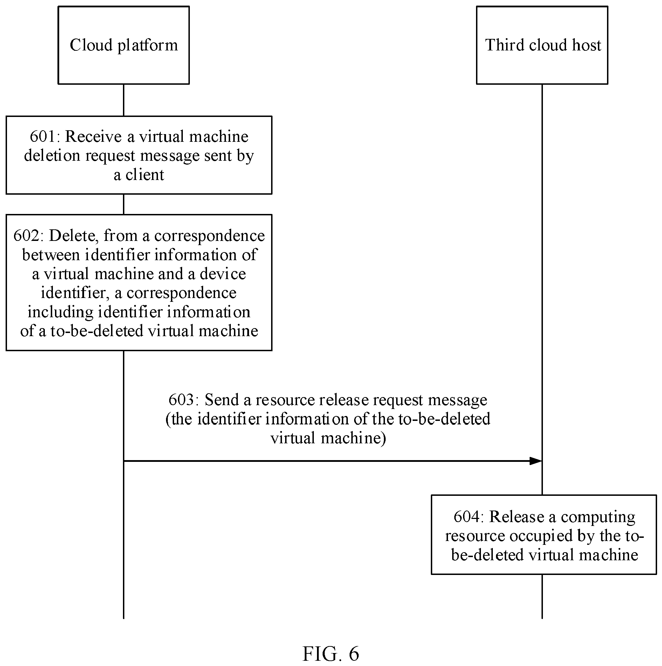

Referring to FIG. 6, an embodiment of this application provides a virtual machine management method. The management method may be used to perform the foregoing operation of deleting the virtual machine on the cloud host, and may be applied to the system shown in FIG. 1. The method includes the following steps.

Step 601: A cloud platform receives a virtual machine deletion request message sent by a client, where the virtual machine deletion request message includes identifier information of a to-be-deleted virtual machine.

When a user needs to delete a virtual machine, for ease of description, the virtual machine is referred to as the to-be-deleted virtual machine, and the user may enter the identifier information of the to-be-deleted virtual machine to the client. Then, the client obtains the identifier information of the to-be-deleted virtual machine, and sends, to the cloud platform, the virtual machine deletion request message including the identifier information of the to-be-deleted virtual machine.

Step 602: The cloud platform deletes, from a correspondence between identifier information of a virtual machine and a device identifier based on the identifier information of the to-be-deleted virtual machine, a correspondence including the identifier information of the to-be-deleted virtual machine.

In this step, the cloud platform obtains, from the correspondence between the identifier information of the virtual machine and the device identifier based on the identifier information of the to-be-deleted virtual machine, a device identifier of the cloud host on which the to-be-deleted virtual machine is located, and deletes, from the correspondence between the identifier information of the virtual machine and the device identifier, a correspondence including the identifier information of the to-be-deleted virtual machine and the device identifier of the cloud host.

Step 603: When the cloud host does not release a computing resource occupied by a to-be-migrated virtual machine, the cloud platform sends a resource release request message to the cloud host on which the to-be-deleted virtual machine is located, where the resource application request message includes the identifier information of the to-be-deleted virtual machine.

In this step, the cloud platform sends the resource release request message to the cloud host based on the device identifier of the cloud host, where the resource release request message includes the identifier information of the to-be-deleted virtual machine.

Optionally, the cloud platform may obtain corresponding status identifier information from a correspondence between identifier information of a virtual machine and status identifier information based on the identifier information of the to-be-deleted virtual machine, where the status identifier information is used to identify whether a computing resource occupied by the to-be-deleted virtual machine is released, so that the cloud platform may determine, based on the status identifier information, whether the cloud host releases the computing resource occupied by the to-be-deleted virtual machine.

Step 604: The cloud host receives the resource release request message and releases the compute resource occupied by the to-be-deleted virtual machine based on the identifier information of the to-be-deleted virtual machine.

Optionally, the cloud platform may further send a fifth notification message to the client after completing the deletion, to notify the client that the to-be-deleted virtual machine is deleted.

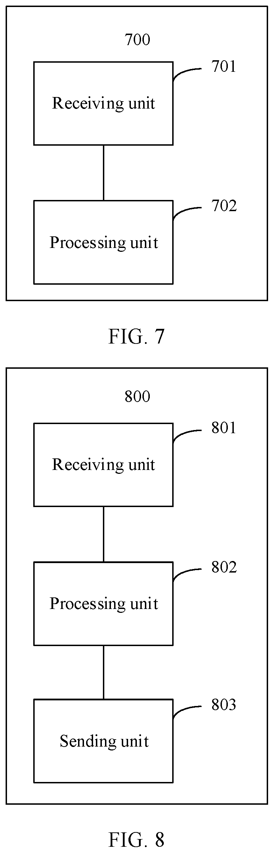

Referring to FIG. 7, an embodiment of this application provides a virtual machine management apparatus 700. A cloud platform is configured to manage the apparatus 700. The apparatus 700 may be the cloud host or a part of the cloud host in any embodiment shown in FIG. 1 to FIG. 6, and includes:
a receiving unit 701, configured to receive a virtual machine stop request message sent by the cloud platform, where the virtual machine stop request message includes identifier information of the to-be-stopped virtual machine; and
a processing unit 702, configured to obtain, based on the identifier information of the to-be-stopped virtual machine, a resource management policy used to manage a computing resource occupied by the to-be-stopped virtual machine; and stop the to-be-stopped virtual machine, and after stopping the to-be-stopped virtual machine, manage, according to the resource management policy, the computing resource occupied by the to-be-stopped virtual machine.

Optionally, the processing unit 702 is configured to:
obtain a type of the to-be-stopped virtual machine based on the identifier information of the to-be-stopped virtual machine; and
obtain a corresponding resource management policy from a correspondence between a type of a virtual machine and a resource management policy based on the type of the to-be-stopped virtual machine.

Optionally, when the to-be-stopped virtual machine is a first-type virtual machine occupying a hard disk of the apparatus or when the to-be-stopped virtual machine is a second-type virtual machine belonging to a VIP user, the resource management policy is used to indicate the apparatus 700 not to release the computing resource occupied by the to-be-stopped virtual machine.

When the to-be-stopped virtual machine is another type of virtual machine other than the first-type virtual machine and the second-type virtual machine, the resource management policy is used to indicate that the apparatus 700 waits after the to-be-stopped virtual machine is stopped and releases, when a waiting time point reaches a preset time threshold, the computing resource occupied by the to-be-stopped virtual machine.

Optionally, the receiving unit 701 is further configured to:
receive the correspondence that is between the type of the virtual machine and the resource management policy and that is sent by the cloud platform.

In this embodiment of this application, the apparatus obtains, based on the identifier information of the to-be-stopped virtual machine, a resource management policy corresponding to the to-be-stopped virtual machine. In this way, after stopping the to-be-stopped virtual machine, the apparatus manages, based on the resource management policy, the computing resource occupied by the to-be-stopped virtual machine, so that for each virtual machine, a resource management policy corresponding to the virtual machine is used to manage a computing resource occupied by the virtual machine. This enriches a manner of managing the virtual machine.

Referring to FIG. 8, an embodiment of this application provides a virtual machine management apparatus 800. The apparatus 800 is configured to manage a plurality of cloud hosts. The apparatus 800 may be the cloud platform or a part of the cloud platform in any embodiment shown in FIG. 1 to FIG. 6, and includes:
a receiving unit 801, configured to receive a virtual machine creation request message sent by a client, where the virtual machine creation request message includes configuration information of a to-be-created virtual machine, and the configuration information includes at least a computing resource quantity required by the to-be-created virtual machine;
a processing unit 802, configured to determine a target cloud host from the plurality of cloud hosts based on the configuration information, where a difference obtained by subtracting the computing resource quantity from a currently remaining idle resource quantity of the target cloud host is greater than or equal to a preset threshold; and
a sending unit 803, configured to send the virtual machine creation request message to the target cloud host, where the virtual machine creation request message is used to request the target cloud host to create the to-be-created virtual machine.

Optionally, the processing unit 802 is configured to:
obtain a resource quantity corresponding to each device identifier stored in a correspondence between a device identifier and a resource quantity, where the resource quantity corresponding to the device identifier includes a currently remaining idle resource quantity of a cloud host corresponding to the device identifier;
separately subtract the computing resource quantity from the idle resource quantity corresponding to each device identifier, to obtain a difference corresponding to each device identifier; and
select a device identifier from device identifiers whose differences each are greater than or equal to the preset threshold, and determine a cloud host corresponding to the selected device identifier as the target cloud host.

Optionally, the processing unit 802 is configured to:
obtain a resource quantity corresponding to each device identifier stored in a correspondence between a device identifier and a resource quantity, where the resource quantity corresponding to the device identifier includes a total resource quantity and a currently remaining idle resource quantity of a cloud host corresponding to the device identifier;
separately subtract the computing resource quantity from the idle resource quantity corresponding to each device identifier, to obtain a difference corresponding to each device identifier;
separately calculate, based on the total resource quantity and the difference corresponding to each device identifier, an idle resource proportion corresponding to each device identifier; and
select a device identifier from device identifiers whose idle resource proportions each are greater than or equal to a preset proportion threshold, and determine a cloud host corresponding to the selected device identifier as the target cloud host.

Optionally, the processing unit 802 is further configured to correspondingly store identifier information of the to-be-created virtual machine and the device identifier of the target cloud host in a correspondence between identifier information of a virtual machine and a device identifier; and/or update the idle resource quantity corresponding to the device identifier of the target cloud host that is stored in a correspondence between a device identifier and a resource quantity to the difference corresponding to the device identifier of the target cloud host.

Optionally, the receiving unit 801 is further configured to receive a virtual machine migration request message sent by the client, where the virtual machine migration request message includes identifier information of a to-be-migrated virtual machine.

The processing unit 802 is further configured to update, in the correspondence between the identifier information of the virtual machine and the device identifier, a device identifier of a first cloud host corresponding to the identifier information of the to-be-migrated virtual machine to a device identifier of a second cloud host, where the first cloud host is a cloud host on which the to-be-migrated virtual machine is located before migration, and the second cloud host is a cloud host on which the to-be-migrated virtual machine is located after the migration.

Optionally, the sending unit 803 is further configured to: when the first cloud host does not release a computing resource occupied by the to-be-migrated virtual machine, send a resource application request message to the second cloud host, where the resource application request message includes a computing resource quantity required by the to-be-migrated virtual machine, and the resource application request message is used by the second cloud host to apply for the computing resource for the to-be-migrated virtual machine based on the computing resource quantity required by the to-be-migrated virtual machine.

Optionally, the receiving unit 801 is further configured to receive a virtual machine start request message sent by a client, where the virtual machine start request message includes identifier information of a to-be-started virtual machine.

The processing unit 802 is further configured to: when the first cloud host on which the to-be-started virtual machine is located does not release a computing resource occupied by the to-be-started virtual machine, or when the first cloud host has released a computing resource occupied by the to-be-started virtual machine and an idle resource quantity of the first cloud host is greater than or equal to the computing resource quantity required by the to-be-started virtual machine, start the to-be-started virtual machine on the first cloud host; when the first cloud host has released the computing resource occupied by the to-be-started virtual machine and the idle resource quantity of the first cloud host is less than the computing resource quantity required by the to-be-started virtual machine, start the to-be-started virtual machine on a third cloud host, where a difference obtained by subtracting the computing resource quantity required by the to-be-started virtual machine from an idle resource quantity of the third cloud host is greater than or equal to a preset threshold, and the first cloud host and the third cloud host are two different cloud hosts.

Optionally, the receiving unit 801 is further configured to receive a virtual machine deletion request message sent by a client, where the virtual machine deletion request message includes identifier information of a to-be-deleted virtual machine.

The processing unit 802 is further configured to delete a correspondence including the identifier information of the to-be-deleted virtual machine from a correspondence between identifier information of a virtual machine and a device identifier.

In this embodiment of this application, when the processing unit determines the target cloud host, because the difference corresponding to the target cloud host is greater than or equal to the preset threshold, it can be ensured that some idle resources whose quantity is not less than the preset threshold are still reserved after the target cloud host creates the to-be-created virtual machine, so that when some virtual machines stopped on the target cloud host are started, the reserved idle resources may be used to start the some virtual machines. This does not affect a speed of starting the some virtual machines.

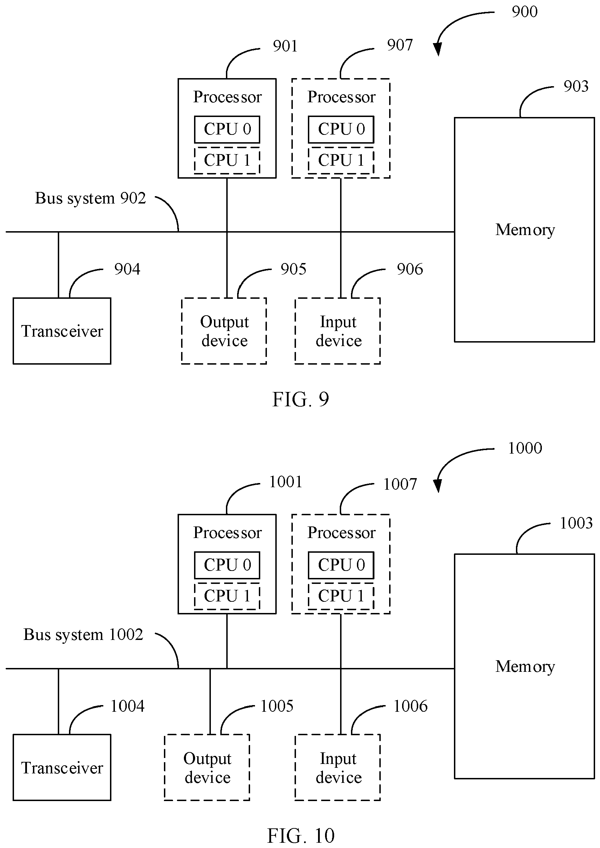

FIG. 9 is a schematic diagram of a virtual machine management apparatus 900 according to an embodiment of this application. The apparatus 900 includes at least one processor 901, a bus system 902, a memory 903, and at least one transceiver 904.

The apparatus 900 is an apparatus of a hardware structure, and may be configured to implement functional units in the apparatus in FIG. 7. For example, a person skilled in the art may figure out that the processing unit 702 in the apparatus 700 shown in FIG. 7 may be implemented by the at least one processor 901 by invoking code in the memory 903, and the receiving unit 701 in the apparatus 700 shown in FIG. 7 may be implemented by the at least one transceiver 904.

Optionally, the apparatus 900 may be further configured to implement a function of the cloud host in any one of the embodiments shown in FIG. 1 to FIG. 6.

Optionally, the processor 901 may be a general-purpose central processing unit (central processing unit, CPU), a microprocessor, an application-specific integrated circuit (application-specific integrated circuit, ASIC), or one or more integrated circuits configured to control program execution in the solutions of this application.

The bus system 902 may include a path for transmitting information between the foregoing components.

The transceiver 904 is configured to communicate with another device or a communications network, for example, an Ethernet, a radio access network (radio access network, RAN), or a wireless local area network (wireless local area networks, WLAN).

The memory 903 may be a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), and a disk storage medium or another disk storage device, or any other medium that can be used to carry or store expected program code in a form of an instruction or data structure and that can be accessed by a computer. However, the memory 903 is not limited herein. The memory may exist independently, and is connected to the processor by using a bus. Alternatively, the memory may be integrated with the processor.

The memory 903 is configured to store application program code for performing the solutions in this application, and the application program code is executed under control of the processor 901. The processor 901 is configured to execute the application program code stored in the memory 903, to implement a function in the method in the patent.

In specific implementation, in an embodiment, the processor 901 may include one or more CPUs, for example, a CPU 0 and a CPU 1 in FIG. 9.

In specific implementation, in an embodiment, the apparatus 900 may include a plurality of processors, for example, the processor 901 and a processor 907 in FIG. 9. Each of the processors may be a single-core (single-CPU) processor or a multi-core (multi-CPU) processor. The processor herein may be one or more devices, circuits, and/or processing cores for processing data (for example, a computer program instruction).

In specific implementation, in an embodiment, the apparatus 900 may further include an output device 905 and an input device 906. The output device 905 communicates with the processor 901, and may display information in a plurality of manners. For example, the output device 905 may be a liquid crystal display (liquid crystal display, LCD), a light emitting diode (light emitting diode, LED) display device, a cathode ray tube (cathode ray tube, CRT) display device, or a projector (projector). The input device 906 communicates with the processor 901, and may accept input of a user in a plurality of manners. For example, the input device 906 may be a mouse, a keyboard, a touchscreen device, or a sensing device.

FIG. 10 is a schematic diagram of a virtual machine management apparatus 1000 according to an embodiment of this application. The apparatus 1000 includes at least one processor 1001, abus system 1002, a memory 1003, and at least one transceiver 1004.

The apparatus 1000 is an apparatus of a hardware structure, and may be configured to implement functional units in the apparatus in FIG. 8. For example, a person skilled in the art may figure out that the processing unit 802 in the apparatus 800 shown in FIG. 8 may be implemented by the at least one processor 1001 by invoking code in the memory 1003, and the receiving unit 801 and/or the sending unit 803 in the apparatus 800 shown in FIG. 8 may be implemented by the at least one transceiver 1004.

Optionally, the apparatus 1000 may be further configured to implement a function of a cloud platform in any one of the embodiments shown in FIG. 1 to FIG. 6.

Optionally, the processor 1001 may be a general-purpose central processing unit (central processing unit, CPU), a microprocessor, an application-specific integrated circuit (application-specific integrated circuit, ASIC), or one or more integrated circuits configured to control program execution in the solutions of this application.

The bus system 1002 may include a path for transmitting information between the foregoing components.

The transceiver 1004 is configured to communicate with another device or a communications network, for example, an Ethernet, a radio access network (radio access network, RAN), or a wireless local area network (wireless local area networks, WLAN).

The memory 1003 may be a read-only memory (read-only memory, ROM) or another type of static storage device that can store static information and instructions, a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), and a disk storage medium or another disk storage device, or any other medium that can be used to carry or store expected program code in a form of an instruction or data structure and that can be accessed by a computer. However, the memory 1003 is not limited herein. The memory may exist independently, and is connected to the processor by using a bus. Alternatively, the memory may be integrated with the processor.

The memory 1003 is configured to store application program code for performing the solutions in this application, and the application program code is executed under control of the processor 901. The processor 1001 is configured to execute the application program code stored in the memory 1003, to implement a function in the method in this patent.

In specific implementation, in an embodiment, the processor 1001 may include one or more CPUs, such as a CPU 0 and a CPU 1 in FIG. 9.

In specific implementation, in an embodiment, the apparatus 1000 may include a plurality of processors, for example, the processor 1001 and a processor 1007 in FIG. 10. Each of the processors may be a single-core (single-CPU) processor or a multi-core (multi-CPU) processor. The processor herein may be one or more devices, circuits, and/or processing cores for processing data (for example, a computer program instruction).

In specific implementation, in an embodiment, the apparatus 1000 may further include an output device 1005 and an input device 1006. The output device 1005 communicates with the processor 1001, and may display information in a plurality of manners. For example, the output device 1005 may be a liquid crystal display (liquid crystal display, LCD), a light emitting diode (light emitting diode, LED) display device, a cathode ray tube (cathode ray tube, CRT) display device, or a projector (projector). The input device 1006 communicates with the processor 1001, and may accept input of a user in a plurality of manners. For example, the input device 1006 may be a mouse, a keyboard, a touchscreen device, a sensing device.

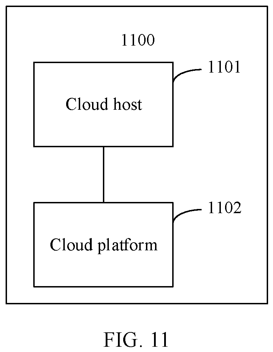

Referring to FIG. 11, an embodiment of this application provides a virtual machine management system 1100. The system includes the apparatus shown in FIG. 7 or FIG. 9 and the apparatus shown in FIG. 8 or FIG. 10. The apparatus in FIG. 7 or FIG. 9 may be a cloud host 1101, and the apparatus in FIG. 8 or FIG. 10 may be a cloud platform 1102.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely optional embodiments of this application, but are not intended to limit this application. Any modification, equivalent replacement, or improvement made without departing from the spirit and principle of this application should fall within the protection scope of this application.

## Claims

1. A virtual machine management method, applied to a cloud host, wherein a cloud platform is configured to manage the cloud host, and the method comprises:
receiving, by the cloud host, a virtual machine stop request message sent by the cloud platform, wherein the virtual machine stop request message comprises identifier information of a to-be-stopped virtual machine;
obtaining, by the cloud host based on the identifier information of the to-be-stopped virtual machine, a resource management policy used to manage a computing resource occupied by the to-be-stopped virtual machine; and
stopping, by the cloud host, the to-be-stopped virtual machine, and after stopping the to-be-stopped virtual machine, managing, according to the resource management policy, the computing resource occupied by the to-be-stopped virtual machine.

2. The method according to claim 1, wherein the obtaining, based on the identifier information of the to-be-stopped virtual machine, a resource management policy used to manage a computing resource occupied by the to-be-stopped virtual machine comprises:
obtaining a type of the to-be-stopped virtual machine based on the identifier information of the to-be-stopped virtual machine; and
obtaining a corresponding resource management policy from a correspondence between a type of a virtual machine and a resource management policy based on the type of the to-be-stopped virtual machine.

3. The method according to claim 1 or 2, wherein when the to-be-stopped virtual machine is a first-type virtual machine occupying a hard disk of the cloud host or the to-be-stopped virtual machine is a second-type virtual machine belonging to a very important people VIP user, the resource management policy is used to indicate the cloud host not to release the computing resource occupied by the to-be-stopped virtual machine; and
when the to-be-stopped virtual machine is another type of virtual machine other than the first-type virtual machine and the second-type virtual machine, the resource management policy is used to indicate that the cloud host waits after stopping the to-be-stopped virtual machine and releases, when a waiting time point reaches a preset time threshold, the computing resource occupied by the to-be-stopped virtual machine.

4. The method according to claim 2, wherein before the obtaining a corresponding resource management policy from a correspondence between a type of a virtual machine and a resource management policy based on the type of the to-be-stopped virtual machine, the method further comprises:
receiving the correspondence that is between the type of the virtual machine and the resource management policy and that is sent by the cloud platform.

5. A virtual machine management method, applied to a cloud platform, wherein the cloud platform is configured to manage a plurality of cloud hosts, and the method comprises:
receiving, by the cloud platform, a virtual machine creation request message sent by a client, wherein the virtual machine creation request message comprises configuration information of a to-be-created virtual machine, and the configuration information comprises at least a computing resource quantity required by the to-be-created virtual machine;
determining, by the cloud platform, a target cloud host from the plurality of cloud hosts based on the configuration information, wherein a difference obtained by subtracting the computing resource quantity from a currently remaining idle resource quantity of the target cloud host is greater than or equal to a preset threshold; and
sending, by the cloud platform, the virtual machine creation request message to the target cloud host, wherein the virtual machine creation request message is used to request the target cloud host to create the to-be-created virtual machine.

6. The method according to claim 5, wherein the determining a target cloud host from the plurality of cloud hosts based on the configuration information comprises:
obtaining a resource quantity corresponding to each device identifier stored in a correspondence between a device identifier and a resource quantity, wherein the resource quantity corresponding to the device identifier comprises a currently remaining idle resource quantity of a cloud host corresponding to the device identifier;
separately subtracting the computing resource quantity from the idle resource quantity corresponding to each device identifier, to obtain a difference corresponding to each device identifier; and
selecting a device identifier from device identifiers whose differences each are greater than or equal to the preset threshold, and determining a cloud host corresponding to the selected device identifier as the target cloud host.

7. The method according to claim 5, wherein the determining a target cloud host from the plurality of cloud hosts based on the configuration information comprises:
obtaining a resource quantity corresponding to each device identifier stored in a correspondence between a device identifier and a resource quantity, wherein the resource quantity corresponding to the device identifier comprises a total resource quantity and a currently remaining idle resource quantity of a cloud host corresponding to the device identifier;
separately subtracting the computing resource quantity from the idle resource quantity corresponding to each device identifier, to obtain a difference corresponding to each device identifier;
separately calculating, based on the total resource quantity and the difference corresponding to each device identifier, an idle resource proportion corresponding to each device identifier; and
selecting a device identifier from device identifiers whose idle resource proportions each are greater than or equal to a preset proportion threshold, and determining a cloud host corresponding to the selected device identifier as the target cloud host.

8. The method according to any one of claims 5 to 7, wherein after the determining a target cloud host from the plurality of cloud hosts based on the configuration information, the method further comprises:
correspondingly storing identifier information of the to-be-created virtual machine and the device identifier of the target cloud host in a correspondence between identifier information of a virtual machine and a device identifier; and/or updating the idle resource quantity corresponding to the device identifier of the target cloud host that is stored in the correspondence between the device identifier and the resource quantity to the difference corresponding to the device identifier of the target cloud host.

9. The method according to any one of claims 5 to 8, wherein the method further comprises:
receiving a virtual machine migration request message sent by the client, wherein the virtual machine migration request message comprises identifier information of a to-be-migrated virtual machine; and
updating, in the correspondence between the identifier information of the virtual machine and the device identifier, a device identifier of a first cloud host corresponding to the identifier information of the to-be-migrated virtual machine to a device identifier of a second cloud host, wherein the first cloud host is a cloud host on which the to-be-migrated virtual machine is located before migration, and the second cloud host is a cloud host on which the to-be-migrated virtual machine is located after the migration.

10. The method according to claim 9, wherein after the updating a device identifier of a first cloud host corresponding to the identifier information of the to-be-migrated virtual machine to a device identifier of a second cloud host, the method further comprises:
when the first cloud host does not release a computing resource occupied by the to-be-migrated virtual machine, sending a resource application request message to the second cloud host, wherein the resource application request message comprises a computing resource quantity required by the to-be-migrated virtual machine, and the resource application request message is used by the second cloud host to apply for the computing resource for the to-be-migrated virtual machine based on the computing resource quantity required by the to-be-migrated virtual machine.

11. The method according to any one of claims 5 to 10, wherein the method further comprises:
receiving a virtual machine start request message sent by the client, wherein the virtual machine start request message comprises identifier information of a to-be-started virtual machine; and
when the first cloud host on which the to-be-started virtual machine is located does not release a computing resource occupied by the to-be-started virtual machine, or when the first cloud host has released a computing resource occupied by the to-be-started virtual machine and an idle resource quantity of the first cloud host is greater than or equal to a computing resource quantity required by the to-be-started virtual machine, starting the to-be-started virtual machine on the first cloud host; or
when the first cloud host has released a computing resource occupied by the to-be-started virtual machine and an idle resource quantity of the first cloud host is less than a computing resource quantity required by the to-be-started virtual machine, starting the to-be-started virtual machine on a third cloud host, wherein a difference obtained by subtracting the computing resource quantity required by the to-be-started virtual machine from an idle resource quantity of the third cloud host is greater than or equal to the preset threshold, and the first cloud host and the third cloud host are two different cloud hosts.

12. The method according to any one of claims 5 to 11, wherein the method further comprises:
receiving a virtual machine deletion request message sent by the client, wherein the virtual machine deletion request message comprises identifier information of a to-be-deleted virtual machine; and
deleting, from the correspondence between the identifier information of the virtual machine and the device identifier, a correspondence comprising the identifier information of the to-be-deleted virtual machine.

13. A virtual machine management apparatus, wherein a cloud platform is configured to manage the apparatus, and the apparatus comprises:
a receiving unit, configured to receive a virtual machine stop request message sent by the cloud platform, wherein the virtual machine stop request message comprises identifier information of a to-be-stopped virtual machine; and
a processing unit, configured to: obtain, based on the identifier information of the to-be-stopped virtual machine, a resource management policy used to manage a computing resource occupied by the to-be-stopped virtual machine; and stop the to-be-stopped virtual machine, and after stopping the to-be-stopped virtual machine, manage, according to the resource management policy, the computing resource occupied by the to-be-stopped virtual machine.

14. The apparatus according to claim 13, wherein the processing unit is configured to:
obtain a type of the to-be-stopped virtual machine based on the identifier information of the to-be-stopped virtual machine; and
obtain a corresponding resource management policy from a correspondence between a type of a virtual machine and a resource management policy based on the type of the to-be-stopped virtual machine.

15. The apparatus according to claim 13 or 14, wherein when the to-be-stopped virtual machine is a first-type virtual machine occupying a hard disk of the apparatus or when the virtual machine is a second-type virtual machine belonging to a very important people VIP user, the resource management policy is used to indicate the apparatus not to release the computing resource occupied by the to-be-stopped virtual machine; and
when the to-be-stopped virtual machine is another type of virtual machine other than the first-type virtual machine and the second-type virtual machine, the resource management policy is used to indicate that the apparatus waits after stopping the to-be-stopped virtual machine, and releases, when a waiting time point reaches a preset time threshold, the computing resource occupied by the to-be-stopped virtual machine.

16. The apparatus according to claim 14, wherein the receiving unit is further configured to:
receive the correspondence that is between the type of the virtual machine and the resource management policy and that is sent by the cloud platform.

17. A virtual machine management apparatus, wherein the apparatus is configured to manage a plurality of cloud hosts, and comprises:
a receiving unit, configured to receive a virtual machine creation request message sent by a client, wherein the virtual machine creation request message comprises configuration information of a to-be-created virtual machine, and the configuration information comprises at least a computing resource quantity required by the to-be-created virtual machine;
a processing unit, configured to determine a target cloud host from the plurality of cloud hosts based on the configuration information, wherein a difference obtained by subtracting the computing resource quantity from a currently remaining idle resource quantity of the target cloud host is greater than or equal to a preset threshold; and
a sending unit, configured to send the virtual machine creation request message to the target cloud host, wherein the virtual machine creation request message is used to request the target cloud host to create the to-be-created virtual machine.

18. The apparatus according to claim 17, wherein the processing unit is configured to:
obtain a resource quantity corresponding to each device identifier stored in a correspondence between a device identifier and a resource quantity, wherein the resource quantity corresponding to the device identifier comprises a currently remaining idle resource quantity of a cloud host corresponding to the device identifier;
separately subtract the computing resource quantity from the idle resource quantity corresponding to each device identifier, to obtain a difference corresponding to each device identifier; and
select a device identifier from device identifiers whose differences each are greater than or equal to the preset threshold, and determine a cloud host corresponding to the selected device identifier as the target cloud host.

19. The apparatus according to claim 17, wherein the processing unit is configured to:
obtain a resource quantity corresponding to each device identifier stored in a correspondence between a device identifier and a resource quantity, wherein the resource quantity corresponding to the device identifier comprises a total resource quantity and a currently remaining idle resource quantity of a cloud host corresponding to the device identifier;
separately subtract the computing resource quantity from the idle resource quantity corresponding to each device identifier, to obtain a difference corresponding to each device identifier;
separately calculate, based on the total resource quantity and the difference corresponding to each device identifier, an idle resource proportion corresponding to each device identifier; and
select a device identifier from device identifiers whose idle resource proportions each are greater than or equal to a preset proportion threshold, and determine a cloud host corresponding to the selected device identifier as the target cloud host.

20. The apparatus according to any one of claims 17 to 19, wherein
the processing unit is further configured to: correspondingly store identifier information of the to-be-created virtual machine and the device identifier of the target cloud host in a correspondence between identifier information of a virtual machine and a device identifier; and/or update the idle resource quantity corresponding to the device identifier of the target cloud host that is stored in the correspondence between the device identifier and the resource quantity to the difference corresponding to the device identifier of the target cloud host.

21. The apparatus according to any one of claims 17 to 20, wherein
the receiving unit is further configured to receive a virtual machine migration request message sent by the client, wherein the virtual machine migration request message comprises identifier information of a to-be-migrated virtual machine; and
the processing unit is further configured to update, in the correspondence between the identifier information of the virtual machine and the device identifier, a device identifier of a first cloud host corresponding to the identifier information of the to-be-migrated virtual machine to a device identifier of a second cloud host, wherein the first cloud host is a cloud host on which the to-be-migrated virtual machine is located before migration, and the second cloud host is a cloud host on which the to-be-migrated virtual machine is located after the migration.

22. The apparatus according to claim 21, wherein
the sending unit is further configured to: when the first cloud host does not release a computing resource occupied by the to-be-migrated virtual machine, send a resource application request message to the second cloud host, wherein the resource application request message comprises a computing resource quantity required by the to-be-migrated virtual machine, and the resource application request message is used by the second cloud host to apply for the computing resource for the to-be-migrated virtual machine based on the computing resource quantity required by the to-be-migrated virtual machine.

23. The apparatus according to any one of claims 17 to 22, wherein
the receiving unit is further configured to receive a virtual machine start request message sent by the client, wherein the virtual machine start request message comprises identifier information of a to-be-started virtual machine; and
the processing unit is further configured to: when the first cloud host on which the to-be-started virtual machine is located does not release a computing resource occupied by the to-be-started virtual machine, or when the first cloud host has released a computing resource occupied by the to-be-started virtual machine and an idle resource quantity of the first cloud host is greater than or equal to a computing resource quantity required by the to-be-started virtual machine, start the to-be-started virtual machine on the first cloud host; or when the first cloud host has released a computing resource occupied by the to-be-started virtual machine and an idle resource quantity of the first cloud host is less than a computing resource quantity required by the to-be-started virtual machine, start the to-be-started virtual machine on a third cloud host, wherein a difference obtained by subtracting the computing resource quantity required by the to-be-started virtual machine from an idle resource quantity of the third cloud host is greater than or equal to the preset threshold, and the first cloud host and the third cloud host are two different cloud hosts.

24. The apparatus according to any one of claims 17 to 23, wherein
the receiving unit is further configured to receive a virtual machine deletion request message sent by the client, and the virtual machine deletion request message comprises identifier information of a to-be-deleted virtual machine; and
the processing unit is further configured to delete, from the correspondence between the identifier information of the virtual machine and the device identifier, a correspondence comprising the identifier information of the to-be-deleted virtual machine.

25. A virtual machine management system, wherein the system comprises the apparatus according to any one of claims 13 to 16, and the apparatus according to any one of claims 17 to 24.
